# FASCICULE DE BREVET EUROPEEN

(11) **EP 0 465 280 B1**
(45) Date de publication et mention de la délivrance du brevet: **11.01.1995**
(21) Numéro de dépôt: 91401455.0
(22) Date de dépôt: 04.06.1991
(51) Int. Cl.: F16D 3/72

(54) **Dispositif d'accouplement en rotation de grande précision et dispositif de commande en translation le comportant, notamment pour instrument optique spatial**
Drehkupplungsvorrichtung mit hoher Präzision und damit ausgerüstete translatorisch bewegte Steuervorrichtung, insbesondere für ein optisches Instrument in einem Raumfahrzeug
High precision rotational coupling device and translation control device using the same, especially for an optical instrument in a spacecraft

(30) Priorité: 22.06.1990 FR 9007851
(43) Date de publication de la demande: 08.01.1992
(73) Titulaire: AEROSPATIALE Société Nationale Industrielle, 75781 Paris Cédex 16 (FR)
(72) Inventeur: Vezain, Gérard, F-06210 Mandelieu (FR)
(74) Mandataire: Rinuy, Santarelli

(56) Documents cités:
- DE-A- 3 639 092
- DE-B- 1 283 030
- GB-A- 943 437
- US-A- 2 274 154
- US-A- 2 909 079

## Description

L'invention concerne un dispositif de commande en translation, applicable notamment à la mise au point d'un instrument optique par exemple embarqué sur un véhicule spatial, et plus généralement un dispositif d'accouplement en rotation de grande précision.

Les instruments optiques embarqués sur satellites, des télescopes par exemple, comportent dans certains cas des mécanismes de mise au point pour l'amélioration de la qualité des images reçues. Ces mécanismes ont pour objet de positionner de façon optimale une ou plusieurs lentille(s) placée(s) dans le champ optique, de manière à assurer une bonne focalisation du faisceau.

La lentille considérée est à cet effet commandée en déplacement rectiligne suivant l'axe optique du faisceau par un dispositif motorisé, comportant en pratique un moteur électrique rotatif pas-à-pas dont l'arbre coopère avec un système de commande en translation du type vis-écrou.

Cette lentille coopère en outre avec un système de guidage en translation pure suivant l'axe optique ; ce dernier doit être de grande précision puisqu'il est destiné à éviter tout désalignement de cette lentille par rapport à cet axe optique (par inclinaison et/ou par décalage transversal).

Le dispositif motorisé commandant le déplacement axial de la lentille doit permettre :
- d'une part, de garantir l'intégrité de la fonction guidage (voir ci-dessus) de manière à ne pas affecter la performance optique du mécanisme : il ne doit donc pas induire de décalage angulaire ou transversal de l'axe optique ;
- d'autre part, d'assurer une marge correcte de motorisation sans nécessiter pour autant une puissance installée trop importante : il faut pour cela ne pas induire d'efforts ou de couples perturbateurs résistants.

Il faut donc que ce dispositif de commande en déplacement permette d'appliquer au bloc porte-lentilles un effort F parallèle à l'axe optique sans générer de contraintes mécaniques perturbatrices tels que : efforts transversaux à l'axe optique, couples de déversement, ...

De telles contraintes mécaniques perturbatrices apparaissent dès lors qu'il y a un défaut d'alignement (même inférieur au degré) entre l'axe du moteur et l'axe du dispositif vis-écrou. Or un tel défaut d'alignement est difficile à éviter du fait des tolérances de fabrication, des défauts d'assemblage, des fluctuations thermiques pouvant induire des dilatations différentielles ...

L'invention a pour objet un dispositif d'accouplement en rotation (on peut aussi parler de "joint de transmission") adapté par exemple à accoupler un moteur électrique rotatif pas-à-pas et un dispositif vis-écrou au sein d'un mécanisme de mise au point du type précité, qui soit capable, même en cas de décalage angulaire et/ou transversal entre les axes des éléments à accoupler, de minimiser les contraintes mécaniques perturbatrices tout en garantissant une cinématique de grande précision.

A cet effet, on a pu penser jusqu'à présent à l'utilisation de joints de cardan ou de joints d'OLDHAM, mais ceux-ci présentent des inconvénients majeurs :
- architecture complexe,
- encombrement important,
- existence des frottements, ce qui nécessite, surtout dans le cas d'applications spatiales, des études tribologiques et des technologies appropriées (maîtrise des coefficients de frottement au cours de la durée de vie en service - qui atteint en pratique plusieurs années - maîtrise des couples résistants ...),
- jeux de transmission, entraînant des chocs et une imprécision de transmission.

Un exemple de joint à bille est donné par le document US-A-2.909.079.

L'invention a pour but de pallier les inconvénients précités, en ne faisant intervenir ni jeu, ni frottement, donc en permettant de limiter à des niveaux très faibles les contraintes mécaniques perturbatrices.

Elle a également pour objet de pallier les conséquences néfastes d'un désalignement ou décalage tout en assurant un écartement longitudinal constant entre les éléments à accoupler. Cela est particulièrement important dans le cas d'une commande en translation du type précité dans laquelle toute variation incontrôlée de l'écartement entre les éléments induit une erreur longitudinale de positionnement : cela peut être particulièrement grave dans le cas d'un mécanisme de mise au point où l'on recherche une précision de positionnement pouvant atteindre le centième de millimètre, voire quelques microns.

On appréciera que l'obtention d'une rigidité en torsion et en traction/compression, et l'obtention d'une grande flexibilité pouvaient a priori paraître être des objectifs incompatibles.

On connaît, d'après le document US-A-2.274.154, un joint de transmission adapté à se courber. Ce joint comporte un câble flexible s'étendant entre deux pièces de fixation, une paire de deux ressorts en spirale coaxiaux disposés sans contact autour du câble flexible et une enceinte élastique formant l'espace contenant cette paire de ressorts. Ce joint est conçu pour être compact, sans creux, d'où la présence de pièces de remplissage mais aussi de lubrifiants ; il est à noter que les ressorts sont à spires jointives. La transmission de couple et la retenue en traction sont assurées par la paire de ressorts tandis que le câble n'intervient qu'en cas de rupture des ressorts. La configuration des ressorts nécessaire à leur fonction, combinée à la compacité sans creux de l'ensemble du joint nuisent bien sûr à la flexibilité du joint. D'autre part, l'usage de lubrifiants et l'existence entre matériaux multiples compliquent sensiblement la conception du joint en cas d'application spatiale.

On connaît par ailleurs, par le document DE-A-3.699.092, un joint de transmission simplement formé d'un soufflet en accordéon destiné à transmettre des couples.

L'invention a enfin pour objet de procurer les avantages précités de manière fiable et durable, par exemple pendant toute la durée de vie d'un instrument optique de véhicule spatial (quelques 7 ans avec des manoeuvres quotidiennes de mise au point).

L'invention propose a cet effet un dispositif d'accouplement en rotation comportant deux flasques d'axes normalement confondus et ayant des centres situés sur ces axes, un fil flexible de longueur constante reliant ces centres, un ressort comprimé entre ces flasques et coaxial au fil, et un soufflet fixé aux flasques, rigide en torsion.

Selon des dispositions préférées, éventuellement combinées :
- le ressort est à l'intérieur du soufflet ;
- le fil est métallique ;
- le fil métallique est en un matériau à coefficient de dilatation inférieur à 10⁻⁶ deg⁻¹ ;
- le soufflet est métallique.

L'invention propose également un dispositif de commande en translation selon une direction de déplacement comportant un moteur d'arbre rotatif axialement fixe, un écrou solidaire d'un équipement mobile et d'axe parallèle à la direction de déplacement et une vis engagée dans cet écrou, cet arbre rotatif et cette vis étant sensiblement coaxiaux et solidaires des flasques d'un dispositif d'accouplement en rotation du type précité.

Des objets, caractéristiques et avantages de l'invention ressortent de la description qui suit, donnée à titre d'exemple non limitatif, en regard des dessins annexés sur lesquels :
- la figure 1 est une vue en coupe longitudinale d'un dispositif d'accouplement en rotation conforme à l'invention, et
- la figure 2 est une vue en coupe longitudinale d'un dispositif de commande en translation, comportant le dispositif d'accouplement de la figure 1 et appliqué au positionnement d'une lentille le long de son axe optique.

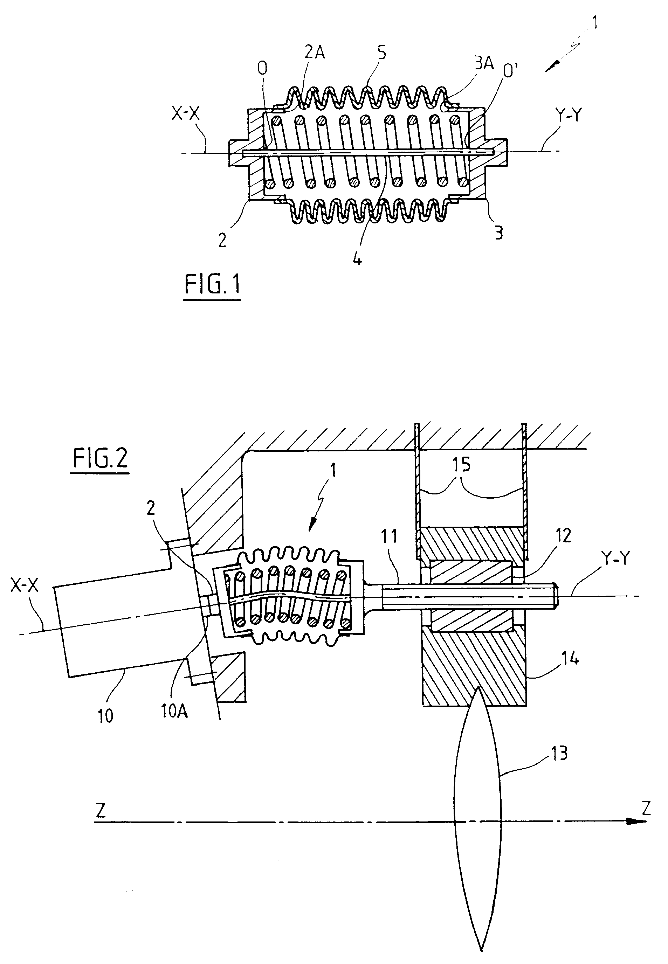

Le dispositif d'accouplement de la figure 1, noté 1 dans son ensemble, comporte deux flasques d'extrémité 2 et 3, d'axes respectifs X-X et Y-Y, et destinés à être attelés à deux éléments que l'on veut accoupler en rotation en sorte que les axes précités soient des axes de rotation.

Ces flasques sont reliés par un fil flexible 4 de longueur constante (faible coefficient de dilatation, voire nul), par exemple métallique, fixé en ses extrémités en des points 0 et 0′ des flasques situés sur leurs axes respectifs. On observe que le fil 4 de la figure 1 est encastré par ses extrémités dans les flasques 2 et 3 le long des axes X-X et Y-Y. Les flasques 0 et 0′ sont en pratique des disques dont les points 0 et 0′ sont les centres, et les axes X-X et Y-Y sont normalement confondus.

Ces flasques sont par ailleurs reliés par un soufflet 5, par exemple métallique, souple en flexion mais raide en torsion. Ce soufflet est coaxial au fil 4. Il est par exemple fixé par soudure aux flasques, ici sur un rebord annulaire périphérique 2A ou 3A de ceux-ci.

Enfin, un ressort 6, coaxial au fil, est comprimé entre les flasques 2 et 3. Dans l'exemple représenté, ce ressort est disposé à l'intérieur du soufflet.

On appréciera que le fil 4 combiné au ressort 6 (qui maintient le fil en tension) maintient un écartement constant entre les points 0 et 0′, tout en autorisant une flexibilité.

Quant au soufflet 5 il assure par torsion la transmission de couple sans nuire, lui non plus, à la flexibilité.

Ce dispositif 1 répond donc bien à l'objectif de l'invention puisqu'il assure à la fois une rigidité en torsion et en traction/compression, et une souplesse notable en flexion.

Une telle structure a en outre pour avantage de permettre de choisir la fréquence propre du dispositif 1 indépendamment de ses autres propriétés mécaniques : cela permet, en jouant par exemple sur la section du fil 4, de choisir pour le dispositif 1 une fréquence propre suffisamment différente de celle de l'élément mené.

Dans l'exemple d'application de la figure 2, l'un des flasques est raccordé à l'arbre de sortie 10A d'un moteur rotatif pas-à-pas 10 tandis que l'autre flasque est raccordé à une vis 11 coopérant avec un écrou 12 d'axe parallèle à l'axe optique Z-Z d'une lentille 13 portée par un cadre 14 en pratique annulaire (il n'est représenté qu'en partie), dont est solidaire l'écrou et dont le guidage parallèlement à l'axe Z-Z est assuré par des lames souples 15 disposées transversalement à l'axe optique ; ces lames sont ici au nombre de deux.

L'arbre 10A et la vis 11 sont sensiblement coaxiaux, avec un éventuel décalage angulaire qui est exagéré sur cette figure 2.

Le montage de cette lentille est avantageusement du type décrit dans la demande de brevet français 89-07738.

On appréciera que le joint de transmission, souple en flexion, mais rigide en torsion, permet de s'affranchir du défaut de coaxialité entre l'arbre moteur et l'axe du dispositif vis/écrou aménagé sur le support de lentille.

Le défaut est absorbé par flexion de l'ensemble du joint et le couple de transmission délivré par le moteur est transmis par un travail en torsion du soufflet métallique.

Cette transmission est sans frottement et sans jeu. La précontrainte exercée par le ressort de compression dans le fil d'acier permet, d'une part, de garantir une position stable de la vis suivant son axe, et ainsi d'assurer la précision de déplacement, d'autre part, d'autoriser un déplacement suivant les deux directions de l'axe.

A titre d'exemple, l'équipage mobile (lentille avec le porte-lentille 14) a une masse de 5 kg et a un débattement de 4 mm. Le fil 4, en invar, a une longueur de 30 mm et un diamètre de 1 mm. Le ressort est précontraint à 40 à 50 N avec un diamètre de 15 mm, et le soufflet est en acier inoxydable, en pratique amagnétique, de préférence formé d'une succession d'anneaux plats assujettis de proche en proche par leurs bords interne et externe, en alternance.

## Revendications

1. Dispositif d'accouplement en rotation comportant deux flasques (2, 3) d'axes (X-X, Y-Y) normalement confondus et ayant des centres (0, 0′) situés sur ces axes, un fil flexible (4) de longueur constante reliant ces centres, un ressort (6) comprimé entre ces flasques et coaxial au fil, et un soufflet (5) rigide en torsion fixé aux flasques.

2. Dispositif selon la revendication 1, caractérisé en ce que le ressort est à l'intérieur du soufflet (5).

3. Dispositif selon la revendication 1 ou la revendication 2, caractérisé en ce que le fil est métallique.

4. Dispositif selon la revendication 3, caractérisé en ce que le fil métallique est en un matériau à coefficient de dilatation inférieur à 10⁻⁶/deg.

5. Dispositif selon l'une quelconque des revendications 1 à 4, caractérisé en ce que le soufflet (5) est métallique.

6. Dispositif de commande en translation selon une direction de déplacement comportant un moteur (10) d'arbre rotatif (10A) axialement fixe, un écrou (12) solidaire d'un équipement mobile (13-14) et d'axe parallèle à la direction de déplacement (Z-Z) et une vis (11) engagée dans cet écrou, cet arbre rotatif (10A) et cette vis étant sensiblement coaxiaux et solidaires des flasques d'un dispositif d'accouplement en rotation selon l'une quelconque des revendications 1 à 5.

## Claims

1. Rotational coupling device comprising two flanges (2, 3) with normally coincident axes (X-X, Y-Y) and centres (O, O') on said axes, a constant length flexible wire (4) joining said centres, a spring (6) compressed between said flanges and coaxial with the wire and a bellows (5) that is rigid in torsion attached to the flanges.

2. Device according to claim 1 characterised in that the spring is inside the bellows (5).

3. Device according to claim 1 or claim 2 characterised in that the wire is a metal wire.

4. Device according to claim 3 characterised in that the coefficient of thermal expansion of the metal wire is less than 10⁻⁶/deg.

5. Device according to any one of claims 1 to 4 characterised in that the bellows (5) is a metal bellows.

6. Device for controlling translation in a displacement direction comprising a motor (10) driving an axially fixed rotatable shaft (10A), a nut (12) attached to a mobile system (13-14) and having an axis parallel to the displacement direction (Z-Z) and a lead screw (11) inserted in said nut, said rotating shaft (10A) and said lead screw being substantially coaxial and attached to flanges of a rotational coupling device according to any one of claims 1 to 5.

## Patentansprüche

1. Drehkupplungsvorrichtung, bestehend aus zwei Flanschen (2, 3) mit normalerweise zusammenfallenden Achsen (X-X, Y-Y), deren Mittelpunkte (O, O') auf diesen Achsen liegen, einem flexiblen Draht (4) konstanter Länge, der diese Mittelpunkte verbindet, einer zwischen diesen Flanschen komprimierten und zu dem Draht koaxialen Feder (6) und einem verwindungssteifen Balg (5), der an den Flanschen befestigt ist.

2. Vorrichtung nach Anspruch 1, dadurch gekennzeichnet, daß die Feder sich im Inneren des Balgs (5) befindet.

3. Vorrichtung nach Anspruch 1 oder Anspruch 2, dadurch gekennzeichnet, daß der Draht aus Metall besteht.

4. Vorrichtung nach Anspruch 3, dadurch gekennzeichnet, daß der Metalldraht aus einem Werkstoff mit einem Ausdehnungskoeffizient unter 10⁻⁶/Grad besteht.

5. Vorrichtung nach einem der Ansprüche 1 bis 4, dadurch gekennzeichnet, daß der Balg (5) aus Metall besteht.

6. Vorrichtung zum Translationsantrieb in einer Bewegungsrichtung, umfassend einen Motor (10) mit axial feststehender rotierender Welle (10A), eine mit einer beweglichen Einrichtung (13-14) fest verbundenen Mutter (12), deren Achse zur Bewegungsrichtung (Z-Z) parallel ist, und eine in diese Mutter eintretende Schraube (11), wobei die rotierende Welle (10A) und die Schraube im wesentlichen koaxial sind und mit den Flanschen einer Drehkupplungsvorrichtung nach einem der Ansprüche 1 bis 5 fest verbunden sind.
